**Europäisches Patentamt**

**European Patent Office**

**Office européen des brevets**

(11) Publication number: **0 274 430**
**A2**

# EUROPEAN PATENT APPLICATION

(21) Application number: **88300081.2**

(22) Date of filing: **07.01.88**

(51) Int. Cl.⁴: **C 09 C 1/42**

(30) Priority: **09.01.87 US 1889**

(43) Date of publication of application:
**13.07.88 Bulletin 88/28**

(84) Designated Contracting States:
**AT BE CH DE ES FR GB GR IT LI LU NL SE**

(71) Applicant: **E.C.C. AMERICA INC.**
**5775 Peachtree-Dunwoody Road N.E. Suite 200 G**
**Atlanta Georgia 30342 (US)**

(72) Inventor: **Rayhatha, Rasik H.**
**329 Franklin Street**
**Tennille Georgia 31089 (US)**

**Andrews, E. Wayne**
**Route 3 Box 25E**
**Sandersville Georgia 31082 (US)**

(74) Representative: **Bull, Michael Alan et al**
**Haseltine Lake & Co. Hazlitt House 28 Southampton**
**Buildings Chancery Lane**
**London WC2A 1AT (GB)**

(54) **Method of preparing structured kaolin pigments.**

(57) The invention relates to a structured kaolinitic pigment having improved physical and optical characteristics when incorporated as a filler or coating pigment in paper. The pigment consists of porous aggregates of kaolin particles which are chemically bonded together. The pigment may be produced by chemically reacting a particulate kaolin with a metal chloride, such as silicon tetrachloride, and with urea or an organic amine. The process is conducted under conditions such that the kaolinite structure is not altered.

EP 0 274 430 A2

## Description

<u>Method of Preparing Structured Kaolin Pigments</u>

<u>Field of the Invention</u>

This invention relates generally to kaolin products, and more specifically relates to a structured kaolin pigment and methods of manufacture of same. The pigment is useful as a filler in paper products and enables preparation of paper coating formulations which yield resultant coated paper products of surprisingly enhanced properties.

<u>Background of the Invention</u>

In the course of manufacturing paper and similar products, including paperboard and the like, it is well-known to incorporate quantities of inorganic materials into the fibrous web in order to improve the quality of the resulting product. In the absence of such "fillers", the resulting paper can have a relatively poor texture due to discontinuities in the fibrous web. The said fillers are also important in improving the printing qualities of the paper, i.e. by improving the surface characteristics of same. The use of appropriate such fillers, further, vastly improves the opacity and the brightness of a paper sheet of a given weight.

A number of inorganic materials have long been known to be effective for many of the aforementioned purposes. Among the best of these materials is titanium dioxide, which can be incorporated into the paper in the form of anatase or of rutile. Titanium dioxide, however, is among the most expensive materials which are so useable. Thus despite the effectiveness of such material as a filler, its use is limited and satisfactory replacements have been much sought after.

Among the materials which have found increasing acceptance as paper fillers are calcined kaolins. Materials of this type are generally prepared by calcining a crude kaolin which may have been initially subjected to prior beneficiation steps in order to remove certain impurities, e.g. for the purpose of improving brightness in the ultimate product. Reference may usefully be had to <u>Proctor</u> U.S. Patent No. 3,014,836, and to <u>Fanselow et al</u>, U.S. Patent No. 3,586,823, which disclosures are representative of the prior art pertinent to calcined kaolins.

Those properties which render a kaolin pigment particularly valuable for use as a filler are also well-known. These include a low abrasion value, and high brightness and opacifying characterisitics. The low abrasion is significant in order to assure that the resultant paper product may be manufactured and processed using conventional machinery without damaging same. The brightness and opacifying characteristics are important in producing an acceptable paper sheet, one which incorporates whiteness, high opacity, good printability, and light weight.

Both the brightness characteristics of the given kaolin and the opacifying properties of same when incorporated as a filler in paper, may be quantitatively related to a property of the filler identified as the "scattering coefficient S". The said parameter, i.e. the scattering coefficient S of a given filler pigment, is a property well-known and extensively utilized in the paper technology art, and has been the subject of numerous technical papers and the like. The early exposition of such measurements was made by Kubelka and Munk, and is reported in <u>Z. Tech Physik</u> 12:539 (1931). Further citations to the applicable measurement techniques and detailed definitions of the said scattering coefficient are set forth at numerous places in the patent and technical literature. Reference may usefully be had in this connection, e.g. to U.S. patents Nos. 4,026,726 and 4,028,173. In addition to the citations set forth in these patents, reference may further be had to Pulp and Paper Science Technology, Vol. 2 "Paper", Chapter 3, by H. C. Schwalbe (McGraw-Hill Book Company, N.Y.).

It is well-known that in order to obtain high light scattering and opacity, the major portion of filler should be in the range of one micrometer. However, good light scatter cannot be achieved solely by using a kaolin having the said size characteristics: an essential further characteristic needed is that the kaolin be structured, i.e., formed from an assemblage of platelets interconnected or bonded to provide aggregates which include a network of the platelets.

Aggregation can be of interest for additional reasons. In particular, many kaolin crude reserves are considerably finer than preferred by the paper industry; i.e., they have an unduly high proportion of particles with E.S.D.'s below 0.25 micrometers. Typical Cretaceous kaolins, e.g., include 25 to 30% by weight of particles below 0.25 micrometers; and typical Tertiary kaolins can include 50 to 60% by weight of particles below 0.25 micrometers E.S.D. The presence of such large quantities of very fine particles can have detrimental effects upon paper strength, and in other respects are undesired by the paper manufacturer. While the said extreme fines can be removed by various separation processes, such as high speed centrifuging, such removal is very expensive and entails high capital investment; this quite aside from the possible loss of high proportions of the input feed.

One method for achieving aggregation is to utilize calcining. Thus, in U.S. Patent No. 4,381,948 to <u>A.D. McConnell et al</u>, a calcined kaolin pigment is disclosed and a method for manufacture of same. The said pigment consists of porous aggregates of kaolin platelets, and exhibits exceptionally high light scattering characteristics when incorporated as a filler in paper. This pigment, which substantially corresponds to the commercially available product ALPHATEX® of the present assignee Anglo-American Clays Corporation (Atlanta, Georgia), is prepared by first blunging and dispersing an appropriate crude kaolin to form an aqueous dispersion of same. The blunged and dispersed aqueous slurry is subjected to a particle size separation from which there is recovered a slurry of the clay, which includes a very fine particle size; e.g. substantially all particles can be smaller than 1 micrometer E.S.D. The slurry is dried to produce a relatively moisture-free clay, which is then thoroughly pulverized to break up agglomerates. This material is then used as a feed to a calciner; such feed is calcined under carefully controlled conditions to typical temperatures of at least 900°C. The resulting product is cooled and pulverized to provide a pigment of the porous high light scattering aggregates of kaolin platelets as described.

Calcined kaolins have also found use in paper coating applications. Reference may be had to the paper by Hollingsworth, Jones, and Bonney, "The Effect of Calcined Clays on the Printability of Coated Rotogravure and Offset Printing Papers", TAPPI Proceedings, pages 9-16, 1983 Coating Conference, discussing the advantages of incorporating small quantities of calcined kaolins into conventional kaolin-based coating formulations. Brightness and opacity of the paper both increase with increased calcined kaolin content, as may be expected from a pigment with high light scatter, and in some formulations gloss may show a slight increase with increasing calcined kaolin content.

Calcined kaolin products, including those of the aforementioned ALPHATEX® type, are seen to be manufactured by relatively complex techniques involving a multiplicity of steps, including specifically a calcining step, plus various preparatory steps and post-calcining steps. Thus, the said product is relatively expensive to produce; and requires considerable investment in complex apparatus and the like -- e.g. highly regulated calciners, etc. It can indeed be noted that the conditions of preparation of these materials must be very carefully controlled in order to keep abrasion acceptably low in the calcined product. For example the calcination operation tends per se to produce an abrasive product -- in consequence of overheating -- if great care is not taken to preclude such a result.

It is further to be noted that in order to produce a low abrasion calcined product, the particle size in the feed to the calciner must be carefully controlled -- even a relatively small increase in coarseness of such feed can have very marked detrimental effect on Valley abrasion.

It has heretofore been known to utilize uncalcined (sometimes referred to as "hydrous") kaolin both as paper fillers and for paper coating. Because the uncalcined material usually does not possess high light scattering qualities or good opacity, its usefulness, especially as a filler, is limited; and this (in addition to improving brightness) is indeed the particular advantage of calcined products of the ALPHATEX® type; i.e. by virtue of the aggregated structures of same, high light scattering properties are provided and good opacity.

With respect further to terminology, it is noted that the prior art literature, including numerous of the prior art patents relating to the field of kaolin products and processing, often uses the term "hydrous" to refer to a kaolin which has not been subjected to calcination -- more specifically, which has not been subjected to temperatures above about 450°C, which temperatures serve to impair the basic crystal structure of kaolin. These so-called "hydrous" clays may have been produced from crude kaolins, which have been subjected to beneficiation, as, for example, to froth flotation, to magnetic separation, to mechanical delamination, grinding, or similar comminution, but not to the mentioned heating as would impair the crystal structure.

In an accurate technical sense, the description of these materials as "hydrous" is, however, incorrect. More specifically, there is no molecular water actually present in the kaolinite structure. Thus, although the composition can be (and often is) arbitrarily written in the form $2 H_2O.Al_2O_3.2SiO_2$, it is now well-known that kaolinite is an aluminum hydroxide silicate of approximate composition $Al_2(OH)_4Si_2O_5$ (which equates to the hydrated formula just cited). Once the kaolin is subjected to calcination, which, for the purposes of this specification means being subjected to heating of 450°C or higher for a period which eliminates the hydroxyl groups, the crystalline structure of the kaolinite is destroyed. Therefore, such material, having been thus calcined, cannot correctly be referred to as a "kaolin". Accordingly, it should be appreciated that henceforth in this specification, when the term "kaolin" or "kaolinite" is utilized, such term necessarily implies that the original structure of the material is intact. Thus, the term "kaolin" as used herein, can be considered to be equivalent to the technically inaccurate (but oft-occurring) prior art usage, "hydrous kaolin" or sometimes simply "hydrous clay."

From time to time, it has been proposed to provide structured kaolin agglomerates by methods unrelated to calcining, the objective being to produce a high light scattering pigment, one with good opacifying properties, without the need for calcination.

Thus, in U.S. Patent No. 4,346,178 to Peter Economou, a structured kaolin agglomerate is disclosed wherein the clay platelets are stabilized or frozen in position by the addition thereto of a urea-formaldehyde prepolymer.

Further relevant art includes U.S. Patent No. 4,072,537 to F. L. Kurrle. Disclosed therein is a composite silicate pigment prepared by a precipitation reaction where spherical hydrous metal silicate particles are precipitated on the planar surfaces of clay particles having a platelet-type structure. The metal silicate pigment component is comprised of the reaction product of a water soluble alkali metal silicate such as sodium silicate and a water soluble salt of a polyvalent metal, such as calcium chloride.

In United States Patents Nos. 3,853,574; 3,864,140; and 3,856,545, all to Thomas H. Ferrigno, pigmentary compositions are disclosed wherein comminuted minerals such as kaolins are combined with inorganic binders, and formed into agglomerates, which when calcined produce compositions embodying numerous particles of the minerals bonded together and presenting internal voids and multiple light reflecting surfaces. The resulting pigmentary compositions are useful in applications requiring high visible light reflectance. These products, however, are, as indicated, produced by calcining, and based upon inorganic binders such as a glassy material, e.g. an alkali metal silicate or the like.

In accordance with the foregoing, it may be regarded as an object of the present invention, to provide a structured kaolin pigment product, which possesses improved light scattering characteristics, and hence is useful as an opacifier and light scattering filler for paper and paper products, and which may similarly be used in other paper manufacturing applications, including in the coating of same.

It is also an object of the invention to provide improved coated papers and paperboard products for printing purposes such as for offset printing, gravure printing and other types of printing, using a structured kaolin pigment.

It is a further object of the present invention, to provide a pigment product of the foregoing character, which is prepared without calcination and therefore without subjecting the kaolin to high temperatures, and which accordingly possesses low abrasiveness in accordance with the kaolin feed from which it is produced.

It is a yet further object of the invention, to provide a pigmentary product of the foregoing character, which is composed of structured aggregates of minute kaolin particles which are bonded together chemically, i.e. without the use of calcination or other high temperature techniques.

A yet further object of the invention, is to provide a process as aforementioned, which enables low abrasion structured kaolin pigments to be produced from coarser process feeds than can normally be employed in calcination to produce a product of comparable low abrasion.

It is a still further object of the invention, to provide kaolin pigment-based coating compositions and related methods, which in comparison to use of conventional kaolin pigment-based coating compositions, improves the coating structure and coverage in papers coated with such compositions, as shown by optical properties such as gloss, brightness and opacity, and as shown by printability properties such as offset print gloss, ink receptivity, better K & N and less mottle, and fewer missing gravure ink dots.

## Summary of the Invention

In accordance with the method of the present invention, a fine particle size kaolin feed is reacted in particulate form with a metal chloride, such as silicon tetrachloride, to form a chemically aggregated structured kaolin pigment. Free moisture present in the particulate feed is sufficient to initiate at least a partial hydrolysis of the metal chloride or chlorides. If the moisture level is too high, however, it can diminish or impair the efficiency of the aggregation process. Thus in the instances where silicon and/or titanium chlorides are used, if the moisture level is too high relative to the metal chloride(s), then the hydrolysis products from the metal chlorides will predominantly precipitate as the metal oxide, i.e. as silica gel and/or titania. In the case of aluminum trichloride, if the moisture level is too high relative to the metal chloride, then the dilution of the finally resulting aluminum hydroxide (in the presence of ammonia) can be so high as to cause inefficient aggregation.

In the instance of the silicon and titanium chlorides, the water to metal chloride molar ratio should be at least 0.23, and generally less than about 50, with from about 1 to 10 being a preferable molar ratio range. Where aluminum trichloride is used the lower limits of moisture are as indicated for silicon and titanium chloride; the upper limits in this case are not critical, except that when moisture level is greater than about 10% by weight of the feed, (corresponding to a water to metal chloride molar ratio of about 8.2), processing as a dry product becomes increasingly difficult, and can necessitate additional drying steps.

The indicated steps are conducted under conditions such that the basic kaolinite crystalline structure (as determined by X-ray or electron diffraction) is not altered -- i.e. the kaolinite is not rendered substantially amorphous, as occurs in conventional high temperature calcining as described for example in the aforementioned McConnell et al, Proctor, and Fanselow et al patents. Heating may optionally be used to shorten the reaction time. When so used, temperatures generally will not, however, exceed about 150° C. In order to complete the polymerization and condensation which is believed to occur pursuant to the invention, it is preferable to age the resulting product for a period, typically at least three days.

The kaolin feed is preferably dry-milled prior to the reaction step with the metal chloride.

The metal chloride utilized in the invention can be one or more of the chlorides having the general formula $MCl_x$, where M is Si, Ti or Al; and x is 3 or 4 in accordance with M. The quantity of metal chloride utilized is preferably from about 20 to 35 pounds per ton of dry mixture. More generally at least 10 lbs. per ton of the metal chloride can be used, with the level selected depending upon the desired scattering improvement, except that a plateau is reached at about 35 to 40 lbs/ton, above which further scattering increases are of limited value in consideration of the escalating costs of the additive.

It is preferable in order to obtain high light scattering characteristics, to utilize in the process of the invention a fine particle size kaolin, preferably one in which the particle size distribution is such that from about 70 to about 100% by weight of same are of less than one micrometer E.S.D. (equivalent spherical diameter). Where the pigment is primarily of interest for use as a filler (as opposed to use in paper coating) and where light scattering qualities are not a primary consideration, coarser feeds can be effectively utilized, e.g., up to 70% by weight less than 2 micrometers E.S.D.

In a further aspect of the invention, it is preferable to intermix with the kaolin feed, small quantities of an aggregation enhancing agent. Such agent is selected from one or more members of the group consisting of the alkaline earth metal carbonates or hydroxides, or lithium carbonate.

The aggregation enhancing agent mixed with the kaolin preferably should provide from about 5 to 120 millimoles of alkaline earth metal or lithium ions per 100 parts by weight of kaolin. This equates to from about 0.5 to 12% by weight kaolin of a particulate alkaline earth metal carbonate or hydroxide or lithium carbonate. Where the particularly preferred calcium carbonate or hydroxide are used, a more preferable addition range is from about 1.5 to 4% by weight of kaolin.

Further, ammonia has desirably been added at addition levels of from about 8 to 16 pounds per ton of the feed mixture, the ammonia being added to the previously combined kaolin and metal chloride. Additional improvements in the products have been found to occur when the steps of metal chloride and ammonia addition are sequentially repeated, following the initial sequence just mentioned. However, when the pigment products are to be used in the coating of paper, it is preferred to use the ammonia treatment only after the second, sequential addition of the metal chloride.

According to the invention, urea or an organic amine, e.g. a liquid or solid amine such as a polyfunctional amine containing 2 to 6 carbon atoms is added and may be used in place of ammonia.

The aggregated products of the invention are found to have a pore volume which is higher than the feed kaolin used to form same, although lower than a calcined kaolin formed from the same feed. The pore void volumes of products of the present invention when prepared from fine particle size feeds are found to range from 0.4 to 0.8 cm$^3$/g.

The products of the invention are accordingly found to have increased oil absorption in comparison to the unaggregated feed, although the oil absorption is not so high as that of a calcined kaolin prepared from the same feed. The increased oil absorption characteristics provides enhanced printing qualities in papers in which the product is incorporated.

The process of the invention, very importantly, serves to aggregate the very fine particles (i.e. the sub 0.25 micrometer particles) present in very fine feeds of the type heretofore discussed. These minute particles can indeed serve in the aggregates as bridges between larger (e.g. micrometer-sized) particles to which they are chemically bonded. Thus, one important advantage to the paper manufacturer is that the otherwise large percentages of troublesome extremely fine particles have been effectively removed as separate entities, but without the need for separation steps, together with the costly equipment required for such operations.

The structured kaolin pigments produced by the foregoing process, have been unexpectedly found to enable preparation of surprisingly improved coated papers, and paperboard products. More specifically, coating formulations providing a bulky structured coating giving improved coverage, enhanced brightness, opacity and particularly gloss at given coating weights, are achieved by use of the said pigment. With respect to the final paper product, these benefits may be taken in the form of either improved sheet properties or significantly reduced coat weights. The resultant coated papers are found to have enhanced properties useful for offset, gravure, letterpress, and similar contact printing.

When used in paper coating applications, the structured kaolin pigments of the invention comprise from about 5 to 60% and preferably from about 10 to 30% by weight of the total pigment component of the coating composition. The balance of the pigment can comprise any of the known coating pigments, such as coating grades of kaolins, calcium carbonate, titanium dioxide, plastic pigments, etc. The coating compositions, in addition to the pigment component, include conventional components, such as an adhesive binder, dispersants, and other known additives.

Brief Description of Drawings

FIGURE 1 is a graph showing the effect on opacity of using a filler comprising a kaolin treated with calcium carbonate, ethylene diamine, silicon tetrachloride and ammonia, as compared with using Alphatex (a calcined kaolin) and filler clay; and

FIGURE 2 similarly shows the effect on ink strike-through.

Detailed Description of the Invention

In a presently preferred method, the said structured pigment may be produced by chemically reacting a classified and pulverized kaolin to which from about 0.4 to about 12% by weight of calcium carbonate or hydroxide has been incorporated, as an aggregation enhancer, with silicon tetrachloride, the latter being intermixed with the clay at room temperature (25°C) and at the rate of approximately 20 to 35 lbs. per ton of dry feed.

The free moisture content of the feed is preferably such as to provide a water to metal chloride molar ratio of from about 1 to 10. These levels are sufficient to hydrolyze the $SiCl_4$ to initially produce monosilicic acid, without, however, being sufficient to precipitate free silica.

The silicon tetrachloride may be intermixed in liquid or vaporous form. The intermixing is effected by any suitable mixing apparatus capable of effecting rapid and intimate contact between the reactants. Low shear mechanical mixers, including paddle mixers and other known mixing devices, are suitable for this purpose.

The mixture of feed and silicon tetrachloride may then be exposed to ammonia, e.g., by addition of gaseous ammonia at the rate of about 8 to 16 pounds per ton of feed. The ammonia serves to neutralize the acidic byproducts and contributes to the bonding process, possibly by formation of $Si_n$-$(NH)_n$ type polymers.

According to the invention, urea or an organic amine, e.g., a liquid or solid amine, is added and may be used in place of ammonia; in this case the conditions that may be employed are similar except that the sequence of addition of base and metal chloride is more flexible. With urea, generally it may be added prior to or with silicon tetrachloride mixing, generally not after; prior addition being preferred. With the organic amines, addition may be before or after the silicon tetrachloride, preferably before. A useful addition range for the amines is from 8 to 20 lbs. per ton of feed. Where liquid amines are used, 8 to 16 lbs. per ton of feed is preferred. Urea is preferably added in the range of 10 to 20 lbs. per ton of feed. Among such amines are ethylenediamine, hexamethylenetetraamine and triethylenetetramine. Similarly, aminosilanes, e.g. 3-aminopropyltrimethoxy silane, can be used in the invention.

During mixing, a rapid initial reaction occurs between the kaolin particles and the reagents. The subsequent process of aggregation and bond formation is a relatively slow one, which levels off in about three days. Heating to temperatures of up to about 150°C after incorporation of the reagents into the feed mixture, can help to expel volatile undesired products, but such heating is not a necessary condition for the present process, which proceeds effectively without the need for any heating.

Additional beneficiation steps can be utilized in the process prior to the intermixing of the clay with silicon tetra chloride. Such steps will be utilized depending upon the characteristics of the initial crude kaolin and upon the intended end use of the resultant product. For example, if the initial crude is already of satisfactory whiteness and brightness, and is otherwise devoid of deleterious contaminants, then minimal or no such beneficiation is necessary; i.e., in many instances mere particle size classification will suffice. Among other things, it should be appreciated that since the process of the present invention does not utilize high temperature heating as occurs during calcining, impurities which are considered highly undesirable in processing by calcining, such as glass forming oxides, are of no major concern in the present process. This indeed is one of the principal advantages of the present process, in that minimum beneficiation of the crude clay is necessary. Since no high temperature heating is utilized, the product of the invention displays an abrasion value which is in accord with the feed kaolin used in the process. Indeed typical abrasions for products of this invention are well under 15, where all abrasions are Valley abrasions determined by the Institute of Paper Chemistry Procedure 65.

Especially where the objective is to attain a very high scattering coefficient in the product, classification of the starting crude kaolin can be an important consideration in the present invention, since as is the case in the aforementioned McConnell et al, U.S. Patent No. 4,381,948, the resulting aggre gates possess light scattering qualities (and consequent opacity when utilized in papers) partially as a function of the fineness and uniformity of the particles which comprise the aggregates. So, for example, use of a finely classified clay fraction, one e.g. where a very high percentage of same are below 1 micrometer in equivalent spherical diameter (E.S.D.) produces an unusually excellent product in the present invention for the same reasons as are set forth in the McConnell et al patent. Classification to such a fine degree may not, however, be necessary or appropriate where the desired end product need not have unusually high light scattering or opacifying properties. Thus, more generally where classification of the kaolin crude is considered desirable, a feed fraction for the present process may be provided wherein at least 88% by weight of the particles are less than 2 micrometers ESD. (Except that as aforementioned, where the product is intended for paper coating applications, the feed fraction should preferably have at least 94% by weight of the particles, less than 2 micrometers, ESD). Classification can be conducted by various techniques known in the art, including air classification or by aqueous classification techniques.

The brightness of pigment products yielded by the invention are primarily dictated by the starting crude kaolin and by the beneficiation, if any, to which the kaolin is subjected prior to being processed in accordance with the present invention. Depending on the particular end use to which the pigment products of the invention are to be applied, final GE brightness can range from 75 to over 90. Where the pigment products are used for coating applications, the kaolin feed for the process producing the structured pigments can have a GE brightness in the range of from about 80 to 92.

The chemical reaction step, instituted by the intermixing of the kaolin feed mix with silicon tetrachloride, is carried out by adding the silicon tetrachloride while the mixing operation proceeds. Once the intermixing operation is completed, the resultant product is aged, preferably for a period of at least 3 days, to enhance the scattering properties of the aggregated kaolin particles.

The quality of the resultant products produced by the process of the invention depends, in part, upon the physical and chemical properties of the crude kaolin serving as the source for the feed. A wide range of crude kaolins can be utilized in the invention. The crude can be processed by conventional methodology known in the art, including by so-called "dry" processing and/or by so-called "wet" processing. Where wet processing is utilized, it can be, in some cases, limited to aqueous classification. In other instances, depending upon the nature of the crude, and the product desired, additional known beneficiation techniques can be used to remove undesired elements or contaminants from the kaolin. Similarly, classification can be effected as a part of the wet processing treatment. In a typical known sequence for wet processing for example, the crude can be blunged and dispersed, and then subjected, e.g. by centrifuging, to a particle size separation as an aqueous slurry or dispersion, from which is recovered a slurry of the clay, wherein a desired percentage of the particles are beneath a specified limit. This slurry can then be dried to produce a clay having very low moisture content, normally one wherein less than 1% moisture by weight is present. Drying in this instance is preferably effected by use of spray drying. The calcium carbonate or hydroxide addition is preferably effected by mixing in the said material prior to the spray drying.

By virtue of its relatively low cost and ready availability, silicon tetrachloride is a presently preferred reagent for use in the process of the present invention. However, other metal chlorides can be effectively utilized in the invention. More specifically, metal chlorides having the general formula $MCl_x$, where x can be 3 or 4 in accordance with M, and M is Si, Al, and/or Ti. The hydrolyzed products of the indicated metal chlorides have an appropriate structure as will enable them to fit within the crystalline tetrahedra structure of kaolin. Similarly, while calcium carbonate is a preferred aggregation enhancing agent for use in the process of the invention, other alkaline earth metal carbonates or hydroxides, or lithium carbonate, are utilizable in the invention.

A preferable range of addition for the aggregation enhancing agent is from 1.5 to 4% by weight of the feed mixture.

Coarse calcium carbonates or hydroxides are less effective in the present invention, where it is preferable rather to use the so-called paper grades of fine ground or precipitated calcium carbonate, i.e. the grades of same which are used for paper filling and paper coating. A suitable material for use in the process of the invention is the CARBITAL 50 or CARBITAL 90 product of Atlantic Carbonates of Baltimore, Maryland. These products have respectively particle size distribution such that 50 and 90% thereof by weight are of less than 2 microns E.S.D.

Although the applicant does not wish to be bound by any specific theory of the present invention, it is hypothesized that the effectiveness of the present invention partially may result from the hydrolysis of the silicon tetrachloride, which leads to monosilicic acid, which either reacts with the kaolin surface immediately or polymerizes and then reacts with the kaolin particles. However, the immediate reaction is believed to be more likely. Addition of ammonia or urea or an amine helps to neutralize the acid resulting from the above, first indicated reaction, and enhances the condensation reactions of the monosilicic acid. The ammonia, urea or amine can also form siliconamine type polymers, which would further enhance and bond the particles. Enhancement of the present process is effected by the addition of the enhancing agent metal ion, which is believed to result in the formation of metal silicates, which function as binding agents, yielding stronger aggregates, and which also helps to neutralize the acidic by-products.

As shown in the above, ammonia, a gaseous base, may be used in the neutralization of acidic by-products of the chemical reaction between kaolinite and readily hydrolyzable metal chlorides. There is also described a method of chemical aggregation and effective neutralization of acidic by-products, with solid or liquid organic bases. The solid or liquid bases are preferred over gaseous bases due to their ease of handling and elimination of hazards associated with the handling of gaseous ammonia. Also it has been found that there is a reduction of one step in the aggregation process, viz. the repeat application of the base and, in addition, organic bases tend to make the aggregate more oleophilic. Oil absorption is further improved which is a useful result for application of the pigments in printing papers. Improvement in ink strike-through is achieved.

The invention is further illustrated by the following Examples, which are to be regarded as only illustrative of the present invention, and not delimitative thereof:

## General Method of Preparation of Feed Clays for Examples I Through VI

The feed clay was prepared by application of a fine kaolinite derived from northeast Georgia, and which comprised a very fine particle size material having a GE brightness in the range of 82 to 87 (in all instances in this specification it will be understood that brightness values are obtained according to the standard specification established by TAPPI procedure T-646 os-75); or a blend of northeast Georgia Kaolins of fine particle size and G.E. brightness of about 87.

The crude clays were beneficiated according to the general practice used in kaolinite processing industries. The beneficiated clays were classified by centrifugation to 96% less than 2 micrometers E.S.D. The classified clays were flocculated using 0.25% by weight of aluminum sulfate and adjusting the pH to 3.5 with sulfuric acid. The flocculated kaolinites were filtered. The significantly dried (about 20% moisture remains) kaolinites were then redispersed with 0.25% by weight of sodium polyacrylate and adjustment of pH to about 7.0. The redispersed kaolinites were later spray dried. The moisture of the dried products was about 1.0% by weight.

## Example I

### Chemical aggregation in presence of short chain organic base, urea:

The spray dried kaolin product was pulverized using a laboratory pulverizer, and is referred to as Control-I. The pulverized clay was mixed with 3.0% by weight of ground calcium carbonate, supplied by the Atlantic Carbonates Corporation in a 75 weight percent slurry. The mixture was dried in an oven at 150°C for 15 minutes and pulverized once more, referred to as Control-II. The dried product was then mixed with 1.5% by weight of finely ground urea, supplied by Fisher Scientific Products. The resulting kaolinite is referred to as Feed Clay-I.

75g of Feed Clay-I was mixed with 1.0% by weight of silicon tetrachloride in a high speed Waring blender. The mixture was subjected to a slight vacuum for five minutes and the process was repeated once. The final product was dried at 150°C for fifteen minutes, giving Product-I. Product-I was allowed to age for three days and tested for optical scatter property in paper. The results are provided in Table I. It should be noted that there is a 74 scatter unit gain as compared to Control-I.

In this and subsequent Examples, all scattering data are normalized by comparison to the scattering coefficient of samples of the aforementioned Alphatex®. Ideally in a study of the present nature, the same batch of beaten pulp should be used throughout. As this is not practical, the method adopted was to fill one set of sheets in each series of tests using the same Alphatex® from series to series. Statistically, the Alphatex® filled samples at 10% filler had a scattering coefficient of 700 $cm^2$/gram, and in each series in which Alphatex® differed from 700, the scattering coefficients of the experimental samples were accordingly adjusted proportionally to the adjustments which the Alphatex®-containing paper required to bring its value to 700 cm²/gram. This procedure is from time to time referred to herein as "normalizing" the scattering coefficients.

<u>Example II</u>

<u>Chemical aggregation in presence of short chain aliphatic amine, ethylenediamine</u>:

Feed Clay-II was prepared using Control-II described in Example I. Control-II was treated with 1.0 by weight of ethylenediamine, supplied by MCB Company, the product being referred to as Feed Clay-II.

75g of Feed Clay-II was mixed with 1.0% by weight of silicon tetrachloride in the high speed Waring blender. The mixture was subjected to a slight vacuum and exposed to about 1.0% by weight of gaseous ammonia. These steps were repeated once. The resulting Product-II was then opened to the air and allowed to age for three days. The aged samples were tested as in Example I. The results are provided in Table I. Note that scatter at 10% filler levels is 80 units higher than Control-I. In addition, simply mixing Control-I with 3% ground calcium carbonate (which was a paper coating grade t:aving a 90% by weight less than 2 micrometers P.S.D.) and 1% ethylenediamine gave a 53 scatter unit gain.

The products of the invention also display increased oil absorption as compared with the control clays. This is illustrated in the data of Table II which compares oil absorbtion for a series of samples including Control I, and Control I reacted with SiCl₄ above and where various short chain amines are used in conjunction with the SiCl₄. The amines while preferably added before the metal chloride, can also be added during the reaction, including following the metal chloride addition to the mixture. Oil absorbtion values were in all instances determined by TAPPI procedure.

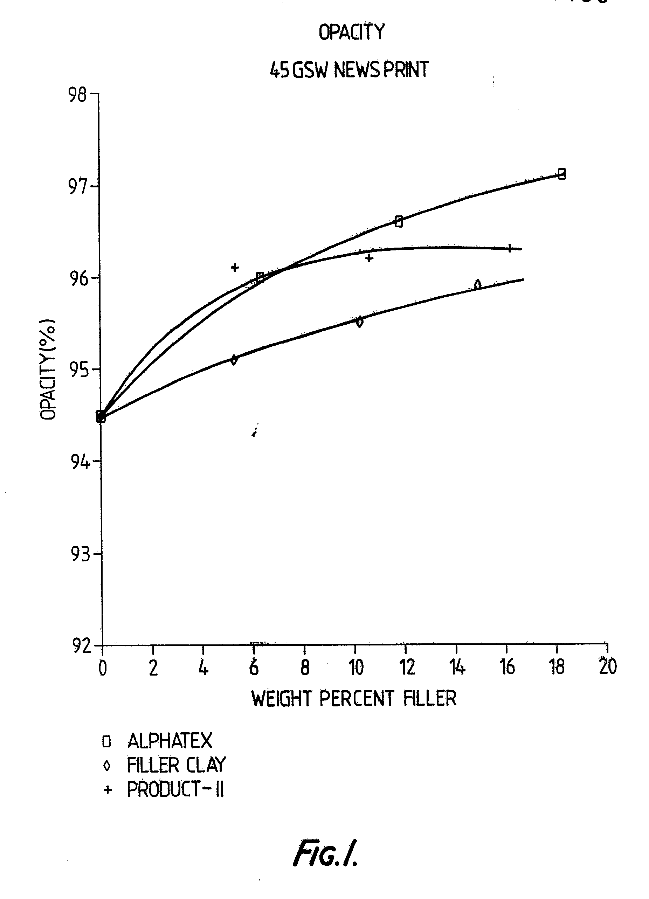

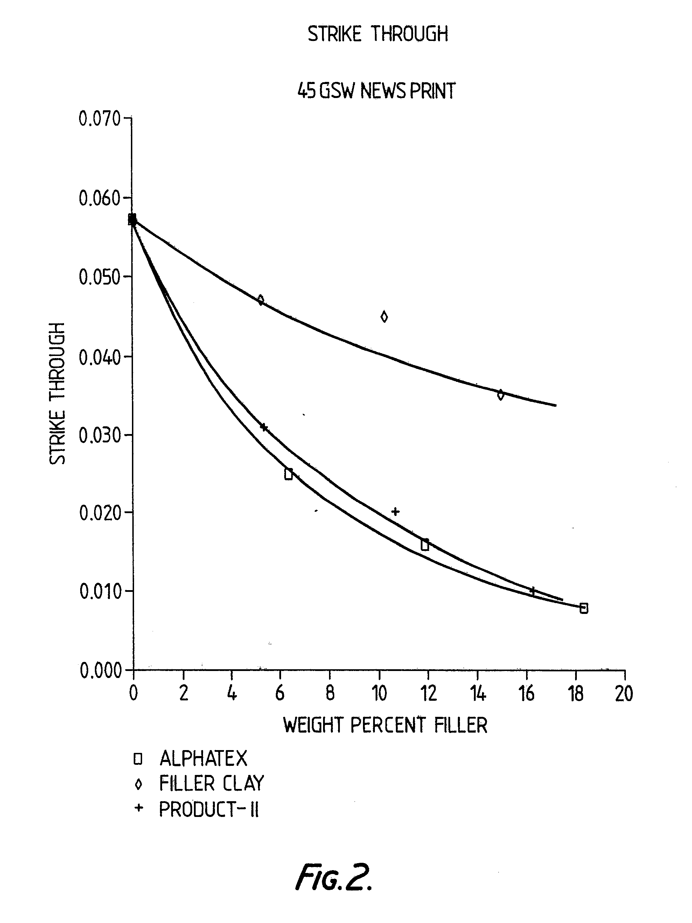

Figures 1 and 2 show, respectively, the favorable comparison of Product II with Alphatex on opacity and ink strike-through.

<div align="center">

TABLE I

Normalized scatter of chemically aggregated kaolinites
with the application of urea and ethylenediamine

</div>

| Material | Light Scatter at 10% Filler loading |
|---|---|
| Control-I | 516 |
| Control-II | 543 |
| Feed Clay-I | 545 |
| Feed Clay-II | 569 |
| Product-I | 590 |
| Product-II | 596 |

0 274 430

## TABLE II

### Effect of Addition of
### Organic Amines on Oil Absorption of
### Chemically Aggregated Kaolin Pigment

| Material | Oil Absorption gms/100g of Clay |
|---|---|
| Control-I | 52.0 |
| Control-I + 1% SiCl$_4$ | 61.0 |
| Control-I + 0.4% Diethylene-triamine followed by 1% SiCl$_4$ | 74.2 |
| Control-I + 1% SiCl$_4$ followed by 0.4% Diethylenetriamine | 72.4 |
| Control-I + 1% 3-Aminopropyltri-methoxysilane followed by 1% SiCl$_4$ | 74.2 |
| Control-I + 1% SiCl$_4$ followed by 1.0% 3-Aminopropyltrimethoxysilane | 67.6 |
| Product-I (as defined above) | 66.3 |
| Product-II (as defined above) | 65.3 |

The Oil was Linseed oil and was employed according to TAPPI pro-cedure. The method was a common spatula rub technique. Spe-cific gravity of the oil was 0.95 g/ml.

Example III

Chemical aggregation in presence of a cyclic amine, hexamethylenetetramine:
The initial process is similar to the preparation of Control-II described in Example I. Control-II was then mixed with 0.4% by weight of hexamethylenetetramine, to provide Feed Clay-III.
75g of Feed Clay-III was treated with 1% by weight of silicon tetrachloride, evacuated for five minutes and re-treated with 1.0% by weight of silicon tetrachloride. The mixture was exposed to air and dried at 150°C for 15 minutes, to give Product-III. The dried Product-III was aged for three days and tested as in Example I. The results are provided in Table III. Note that there is a 57 scatter unit increase after chemical aggregation. It is also to be noted that simple mixing of Control-II with hexamethylenetetramine leads to a 31 scatter unit increase.

Example IV

Preparation of Control-III
Control-III was prepared from Control-I by mixing with 0.4% by weight of hexamethylenetetramine and drying at 150°C for 15 minutes, i.e. it contains no calcium carbonate. Control-III shows nearly 13 units increase in scatter without any further chemical treatment. The result is provided in Table III.

Example V
In this example, Feed Clay-III was treated with a sequence of 1.0% by weight of silicon tetrachloride and 0.4% by weight of ammonia according to the procedure described in Example II. The Product-IV was dried at

9

150°C for fifteen minutes and aged for three days and tested according to Example I. The result is provided in Table III. Note that the scatter unit increase was 61 units compared to Control-I. Note also that the difference in scatter units between Product-III and Product-IV is only four units, which is within measurement limitation. These results indicate that a solid organic base can be used instead of gaseous ammonia in the chemical aggregation.

### Table III

Normalized scatter of chemically aggregated
kaolinites with the application of hexamethylenetetramine

| Material | Light scatter at 10% Filler loading |
|---|---|
| Control-I | 520 |
| Control-III | 533 |
| Feed Clay-III | 551 |
| Product-III | 577 |
| Product-IV | 581 |

Example VI
A series of feed clays was prepared from Control-I using ground calcium carbonate and ethylenediamine.

Feed Clay-IV:
Control-1 was mixed with 0.8% by weight of ethylenediamine.

Feed Clay-V:
Control-I was mixed with 2% by weight of calcium carbonate and 0.4% by weight of ethylenediamine.

Feed Clay-VI:
Control-I was mixed with 2.0% by weight of calcium carbonate and 0.8% by weight of ethylenediamine.
The above feed clays were aggregated as follows:

Product V:
Control-I was treated with 1.0% by weight of silicon tetrachloride, evacuated for five minutes and exposed to 0.4% by weight of ammonia. The above process was repeated once and the final product was dried at 150°C for 15 minutes and aged for three days.

Product-VI:
The whole process was identical to that in the production of Product-V except this time 75g of Feed Clay-IV was used.

Product-VII:
The feed clay and the process were the same as Product-VI except that no ammonia was used.

Product-VIII:
The process was identical to that used in the preparation of Product-V except 75g of Feed Clay-V was used.

Product-IX:
The process was identical to that used in the preparation of Product-VIII except no ammonia was used.

Product-X:

The process of production was identical to that used in the preparation of Product-VIII except 75g of Feed Clay-VI was used.

Product-XI:

The process of production was identical to that used in the preparation of Product-IX except 75g of Feed Clay-VI was used.

All the products, feed clays and controls were tested for their performance as described in Example I. The results are provided in Table IV. Note that the effect of organic amine in aggregation is much weaker in the absence of ground calcium carbonate. However, when ground calcium carbonate was present, chemical aggregation was as effective as in the presence of gaseous ammonia.

## Table IV

### Normalized scatter of chemically aggregated kaolinites with the application of ethylenediamine

| Material | Light Scatter at 10% Filler loading |
|----------|-------------------------------------|
| Control-I | 521 |
| Feed Clay IV | 540 |
| Feed Clay V | 549 |
| Feed Clay VI | 561 |
| Product-V | 575 |
| Product-VI | 549 |
| Product-VII | 572 |
| Product-VIII | 593 |
| Product-IX | 587 |
| Product-X | 588 |
| Product-XI | 579 |

Example VII

Chemical aggregation in presence of urea:

A series of experiments, similar to that in Example VI were carried out using urea as solid organic base. The results are provided in Table V.

11

**0 274 430**

<u>Table V</u>

Normalized scatter of chemically aggregated
kaolinites with the application of urea

| Material | Light Scatter at 10% Filler loading |
|---|---|
| Feed-A, Control-I + 1.0% urea | 525 |
| Feed-B, Control-I + 1.5% urea | 529 |
| Feed-C, Control-I + 2.0% Calcium carbonate + 1.0% urea | 540 |
| Feed-D, Control-I + 2.0% Calcium carbonate + 1.5% urea | 539 |
| Feed-A treated by Method-1 | 575 |
| Feed-C treated by Method-1 | 566 |
| Feed-B treated by Method-1 | 565 |
| Feed-B treated by Method-2 | 575 |
| Feed-D treated by Method-1 | 563 |
| Feed-D treated by Method-2 | 570 |

Method-1 refers to a chemical treatment where no ammonia was used in the reaction.

Method-2 refers to a chemical reaction where 0.4% by weight of ammonia was used after each silicon tetrachloride treatment.

While the present invention has been particularly set forth in terms of specific embodiments thereof, it will be understood in view of the instant disclosure, that numerous variations upon the invention are now enabled to those skilled in the art, which variations yet reside within the scope of the present teaching. Accordingly, the invention is to be broadly construed, and limited only by the scope and spirit of the claims now appended hereto.

**Claims**

1. A process for producing a structured kaolin pigment having enhanced light scattering and opacifying properties when incorporated in paper; said process comprising the steps of:

(a) forming a feed mixture of a fine particle size kaolin; and

(b) aggregating the kaolin particles to form the structured pigment, by combining said feed mixture in particulate form with a metal chloride having the general formula $MCl_x$ where M is Si, Al or Ti, and x is 3 or 4 depending on the valency of M;

wherein (i) the feed mixture is mixed with urea or an organic amine before aggregation or (ii) urea or an organic amine is added simultaneously with the metal chloride or (iii) urea or an organic amine is added after the feed mixture has been combined with the metal chloride;

wherein the moisture level present in the said feed mixture reacted in step (b) is sufficient at least partially to hydrolyze the metal chloride;

and wherein steps (a) and (b) are conducted under conditions such that the basic kaolinite crystalline structure is not altered.

2. A process according to Claim 1 in which, in step (a), the feed mixture is formed as a fine particle size kaolin with an aggregation enhancing agent chosen from one or more of an alkaline earth metal carbonate, an alkaline earth metal hydroxide and lithium carbonate, the enhancing agent being present in a quantity to provide from about 5 to 120 millimoles of the enhancing agent metal ion species per 100

12

parts by weight of kaolin.

3. A process according to Claim 1 or 2, wherein urea is added before, during or after combination of the feed mixture with the metal chloride.

4. A process according to Claim 1 or 2, in which a liquid or solid polyfunctional amine containing from 2 to 6 carbon atoms is added before, during or after combination of the feed mixture with the metal chloride.

5. A process according to Claim 1 or 2, wherein the organic amine is an aminosilane which is added before, during or after combination of the feed mixture with the metal chloride.

6. A process according to Claim 1, 2, 3, 4 or 5 wherein ammonia is added to the feed mixture.

7. A process according to Claim 1, 2, 3, 4 or 5, wherein an organic amine is used, which is added to the reactants in step (b).

8. A process according to any preceding claim, wherein ammonia is added to the reactants.

9. A process according to any preceding claim, wherein the metal chloride comprises silicon tetrachloride and wherein the moisture level in said feed is below that at which the predominant hydrolysis product is silica.

10. A process according to any preceding claim, further including the step of heating the reactants in step (b) to temperatures not higher than 150° C.

11. A process according to any preceding claim, further including the step of aging the product of step (b) for a period of at least three days to enhance the scattering properties of the aggregated kaolin particles.

12. A process according to any preceding claim, wherein the kaolin has a particle size distribution such that from about 70 to 100% by weight thereof is of less than 2 micrometers equivalent spherical diameter.

13. A process according to any preceding claim, wherein the feed mixture subjected to step (b) has a free moisture content such as to provide a water to metal chloride molar ratio of less than about 50.

14. A process according to any preceding claim, wherein the feed mixture subjected to step (b) has a free moisture content such as to provide a water to metal chloride molar ratio of from about 1 to 10.

15. A process according to any preceding claim, wherein the kaolin employed in step (a) is the product of air classifying a kaolin crude clay to at least as fine as 88% less than 2 microns.

16. A process according to Claim 2, or any one of Claims 3 to 15 when appendant to Claim 2, wherein the aggregation enhancing agent comprises from about 0.5 to about 12% by weight of the kaolin, of a particulate alkaline earth metal carbonate or hydroxide.

17. A process according to Claim 2, or any one of Claims 3 to 16 when appendant to Claim 2, wherein the enhancing agent comprises calcium carbonate.

18. A process according to Claim 17, wherein the feed mixture of kaolin and calcium carbonate is dry-milled prior to step (b).

19. A process according to any preceding claim, wherein the urea or organic amine is added at levels in the range of about 8 to about 20 lbs/ton of the feed mixture.

20. A structured kaolinitic pigment having improved oil absorption properties, comprising porous aggregates of kaolin particles which are chemically bonded to one another by the process of any one of the preceding claims.

21. A structured kaolinitic pigment having improved oil absorption properties produced by the process of any one of the preceding claims.

0274450

### OPACITY
### 45 GSW NEWS PRINT

□ ALPHATEX
◇ FILLER CLAY
+ PRODUCT-II

*Fig.I.*

0274430

STRIKE THROUGH

45 GSW NEWS PRINT

Legend:
□ ALPHATEX
◊ FILLER CLAY
+ PRODUCT-II

*Fig.2.*